# EUROPÄISCHE PATENTSCHRIFT

(11) **EP 2 478 235 B1**
(45) Veröffentlichungstag und Bekanntmachung des Hinweises auf die Patenterteilung: **04.11.2015**
(21) Anmeldenummer: 10743171.0
(22) Anmeldetag: 19.08.2010
(51) Int. Cl.: F16C 19/26, F16C 33/36, F16C 33/54

(54) **KUGELROLLENLAGER**
BALL ROLLER BEARING
ROULEMENT À ROULEAUX SPHÉRIQUES

(30) Priorität: 18.09.2009 DE 102009042076
(43) Veröffentlichungstag der Anmeldung: 25.07.2012
(73) Patentinhaber: Schaeffler Technologies AG & Co. KG, 91074 Herzogenaurach (DE)
(72) Erfinder: HOFMANN, Heinrich, 97422 Schweinfurt (DE); BOHR, Andreas-Johann, 91074 Herzogenaurach (DE); GEIGER, Ernst, 91352 Hallerndorf (DE); WEBER, Otmar, 96178 Pommersfelden (DE)
(86) Internationale Anmeldenummer: PCT/EP2010/062107
(87) Internationale Veröffentlichungsnummer: WO 2011/032801

(56) Entgegenhaltungen:
- US-A1- 2009 180 724

## Beschreibung

### Gebiet der Erfindung

Die Erfindung betrifft ein einreihiges Kugelrollenlager nach den oberbegriffsbildenden Merkmalen des Patentanspruchs 1, welches beispielsweise besonders vorteilhaft als Festlager für die Antriebs- oder Abtriebswelle eines Kfz-Schalt-getriebes einsetzbar ist.

### Hintergrund der Erfindung

Kugelrollenlager sind Wälzlager mit speziellen, als Kugelrollen ausgebildeten Wälzkörpern, die ausgehend von einer Kugelgrundform jeweils zwei von dieser Kugelgrundform abgeflachte, parallel zueinander angeordnete Seitenflächen aufweisen, zwischen denen jeweils die Laufflächen der Kugelrollen angeordnet sind. Derartige Kugelrollenlager sind in den verschiedensten Ausführungen als ein-, zwei-, drei oder auch vierreihige Radial- oder Schräg-Kugel rollenlager allgemein bekannt und benötigen durch die spezielle Wälzkörperform auch spezielle Käfigausführungen, um einerseits eine maximale Schräglage der Kugelrollen relativ zur Lagerlängsachse zu begrenzen sowie andererseits ein Taumeln der Kugelrollen quer zu ihrer Umlaufrichtung zu vermeiden.

Ein gattungsbildendes einreihiges Kugelrollenlager ist beispielsweise aus der US 2009/180724 A1 vorbekannt und besteht im Wesentlichen aus einem äußeren Lagerring und einem inneren Lagerring sowie aus einer Vielzahl zwischen diesen Lagerringen angeordneter Kugelrollen, die mit ihren Laufflächen in zwei in die Innenseite des äußeren Lagerrings und in die Außenseite des inneren Lagerrings eingearbeitete rillenförmigen Laufbahnen abrollen und in Umfangsrichtung durch einen Lagerkäfig in gleichmäßigen Abständen zueinander gehalten werden. Dieser Lagerkäfig ist in an sich bekannter Weise als aus zwei Ringhälften zusammengefügter Blechnietkäfig ausgebildet, welcher für jede Kugelrolle einzelne dieselben an einer Teilkreislinie umschließende Käfigtaschen aufweist, die durch in Umfangsrichtung gerade Verbindungsstege miteinander verbunden sind. In die mit den Seitenflächen der Kugelrollen in Kontakt stehenden Längsstege der Käfigtaschen sind dabei sich über die Breite der Seitenflächen erstreckende Keilvertiefungen eingearbeitet, so dass die Kugelrollen über zwei reibungsarme Linienkontakte zwischen ihren Seitenflächen und den Längsstegen der Käfigtaschen einerseits eine axiale Führung zwischen den Lagerringen aufweisen und andererseits mit einem definierten Freiheitsgrad zum selbsttätigen Ausrichten an den Druckwinkel des Radialwälzlagers ausgebildet sind.

In der Praxis hat es sich jedoch gezeigt, dass derartigen Kugelrollenlagern aufgrund der geringen maximal einbaubaren Anzahl von Kugelrollen, die von den Abmessungen des inneren und des äußeren Lagerrings, dem Kugelrollendurchmesser und auch von der Käfigbauform abhängig ist, in Bezug auf die radiale Tragfähigkeit des Kugelrollenlagers Grenzen gesetzt sind.

### Aufgabe der Erfindung

Ausgehend von den dargelegten Nachteilen des bekannten Standes der Technik liegt der Erfindung deshalb die Aufgabe zu Grunde, ein Kugelrollenlager zu konzipieren, dessen Lagerkäfig konstruktiv so gestaltet ist, dass eine größere Anzahl von Kugelrollen in das Kugelrollenlager einbaubar ist und somit dessen radiale Tragfähigkeit vergrößert wird.

### Beschreibung der Erfindung

Erfindungsgemäß wird diese Aufgabe bei einem Kugelrollenlager nach dem Oberbegriff des Anspruchs 1 derart gelöst, dass der Lagerkäfig als Fensterkäfig mit zwei seitlichen, um zwei umlaufende Bördelkanten zum inneren Lagerring abgebogenen und durch mehrere Taschenstege miteinander verbundenen Käfigborden zur Axialführung der Kugelrollen ausgebildet ist und dessen einzelne durch die Taschenstege voneinander getrennten Käfigtaschen jeweils eine Kreuzlochform aufweisen, die aus einer längs zur Umfangsrichtung angeordneten Querschnittskontur einer Kugelrolle und aus einer darin integrierten, quer zur Umfangsrichtung angeordneten Freikontur zum Einsetzen einer Kugelrolle in den Lagerkäfig gebildet wird, wobei die Freikontur in jeder Käfigtasche des Lagerkäfigs auf die geometrische Form eines Rechtecks erweitert ausgebildet ist und dass die Bördelkanten der Käfigborde jeweils durch eine umlaufende linienförmige Rollierung in ihrer Materialstärke gegenüber der übrigen Materialstärke des Lagerkäfigs verringert ausgebildet sind.

Bevorzugte Ausgestaltungen und Weiterbildungen des erfindungsgemäß ausgebildeten Kugelrollenlagers werden in den Unteransprüchen beschrieben.

Danach ist es gemäß Anspruch 2 bei dem erfindungsgemäß ausgebildeten Kugelrollenlager vorgesehen, dass die kurzen Seiten des Rechtecks der Freikontur sich bis oder nahezu bis zu den Bördelkanten der Käfigborde erstreckend sowie parallel zu diesen verlaufend angeordnet sind. Mit einer solchen Ausbildung soll erreicht werden, dass die Breite der Taschenstege an ihren Übergängen zu den Käfigborden direkt bis zu den Käfigborden minimiert wird, um somit eine größtmögliche Steifigkeitsverringerung zu erzielen.

Als vorteilhafte Ausgestaltung des erfindungsgemäß ausgebildeten Kugelrollenlagers wird es durch Anspruch 3 darüber hinaus noch vorgeschlagen, dass die Freikontur in jeder Käfigtasche zusätzlich mit in die langen Seiten des Rechtecks eingearbeiteten und dessen kurzen Seiten verlängernden Ausklinkungen ausgebildet ist. Durch eine solche Maßnahme kann somit die Breite der Taschenstege an ihren Übergängen zu den Käfigborden noch weiter verringert werden, so dass ein Höchstmaß an Flexibilität der Taschenstege beim Einrollen des Lagerkäfigs zu einem Ring erreicht wird und der Lagerkäfig die gewünschte Rundheit aufweist. Besonders vorteilhaft ist es dabei, die Ausklinkungen halbkreisförmig, dreieckig oder viereckig auszubilden.

Das erfindungsgemäß ausgebildete Kugelrollenlager weist somit gegenüber den bekannten Kugelrollenlagern den Vorteil auf, dass es durch Verwendung eines als Fensterkäfig ausgebildeten Lagerkäfigs mit zwei seitlichen, um zwei umlaufende Bördelkanten zum inneren Lagerring abgebogenen und durch mehrere Taschenstege miteinander verbundenen Käfigborden zur Axialführung der Kugelrollen und durch die Ausbildung der einzelnen durch die Taschenstege voneinander getrennten Käfigtaschen in Kreuzlochform mit einer größeren Anzahl von direkt in den Lagerkäfig einsetzbarer Kugelrollen befüllbar ist und somit eine vergrößerte radiale Tragfähigkeit aufweist. Darüber hinaus ist es durch die spezielle Kontur jeder Käfigtasche ohne Funktionseinschränkungen des Lagerkäfigs möglich, die Taschenstege zwischen den Käfigtaschen an ihren Übergängen zu den Käfigborden relativ schmal auszubilden und somit deren Steifigkeit derart zu verringern, dass der Lagerkäfig nach dem Einrollen zu einem Ring in seiner Endform die erforderliche Rundheit aufweist.

### Kurze Beschreibung der Zeichnungen

Eine bevorzugte Ausführungsform des erfindungsgemäß ausgebildeten Kugelrollenlagers wird nachfolgend unter Bezugnahme auf die beigefügten Zeichnungen näher erläutert. Dabei zeigen:
- Figur 1: eine räumliche Gesamtansicht eines erfindungsgemäß ausgebildeten Kugelrollenlagers;
- Figur 2: einen räumlichen Querschnitt durch das erfindungsgemäß ausgebildete Kugelrollenlager in Figur 1;
- Figur 3: den Schnitt A - A durch den Lagerkäfig des erfindungsgemäß ausgebildete Kugelrollenlagers gemäß Figur 4;
- Figur 4: den Schnitt B - B durch den Lagerkäfig des erfindungsgemäß ausgebildete Kugelrollenlagers gemäß Figur 3.
- Figur 5: eine Vergrößerung der Einzelheit X des Lagerkäfigs des erfindungsgemäß ausgebildete Kugelrollenlagers gemäß Figur 4;
- Figur 6: den Schnitt C - C durch den Lagerkäfig des erfindungsgemäß ausgebildete Kugelrollenlagers gemäß Figur 3.

### Ausführliche Beschreibung der Zeichnungen

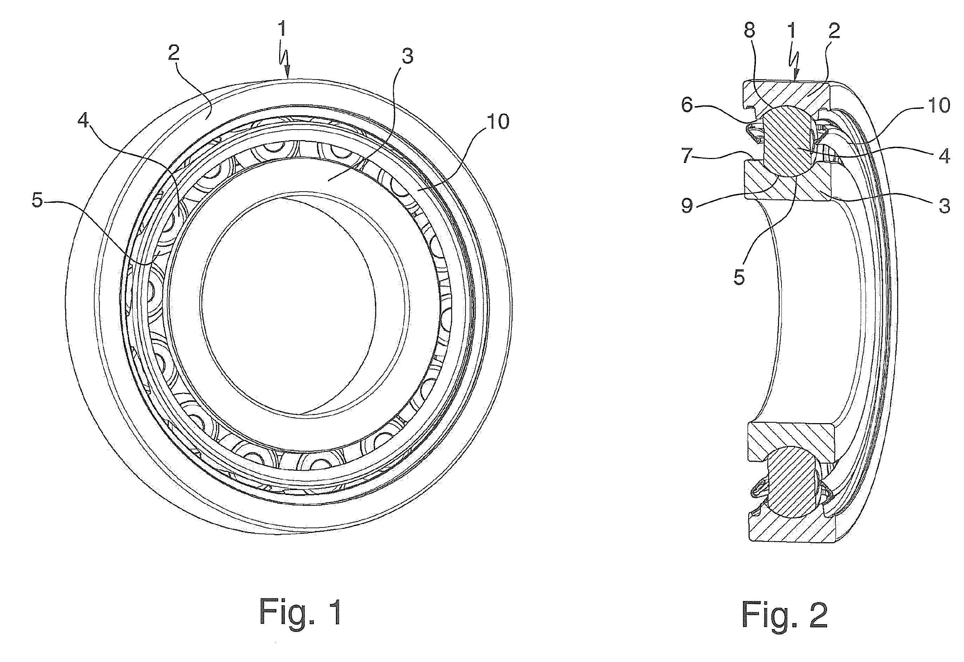

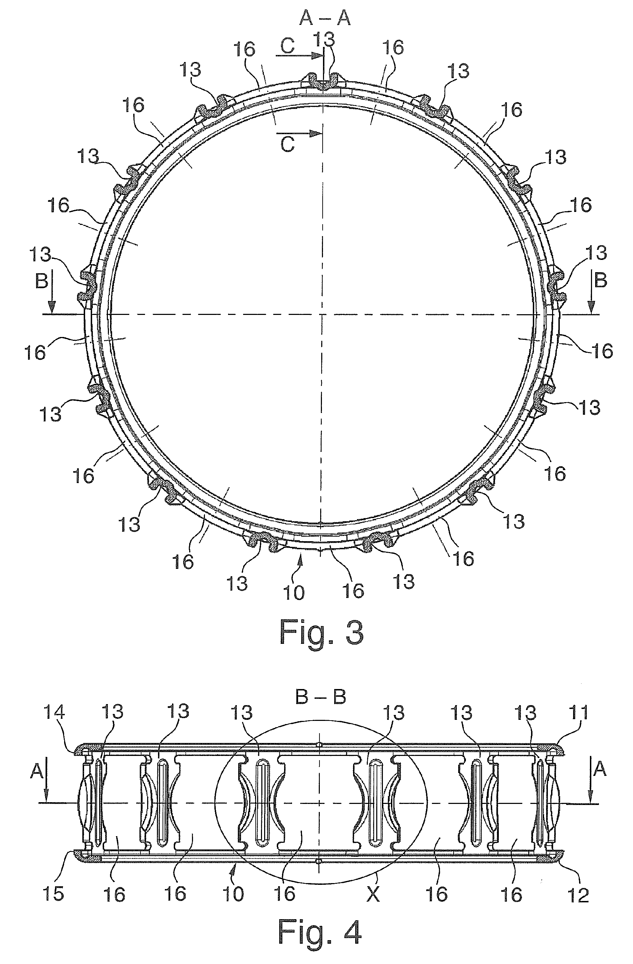

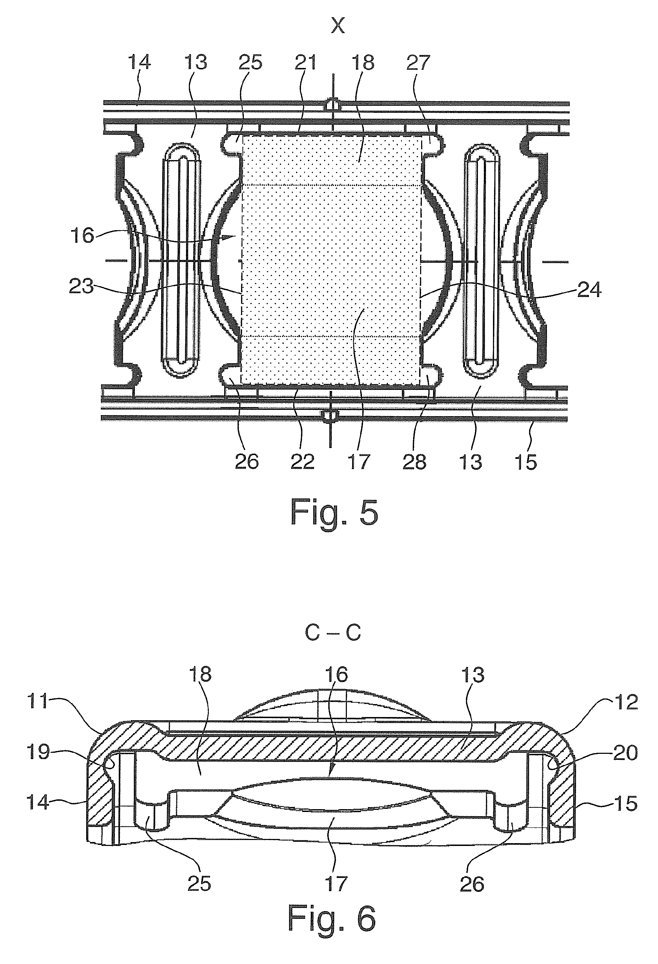

Aus den Figuren 1 und 2 geht deutlich ein Kugelrollenlager 1 hervor, welches im Wesentlichen aus einem äußeren Lagerring 2 und einem inneren Lagerring 3 sowie aus einer Vielzahl zwischen diesen Lagerringen 2, 3 angeordneter Kugelrollen 4 besteht, die mit ihren Laufflächen 5 in zwei in die Innenseite 6 des äußeren Lagerrings 2 und in die Außenseite 7 des inneren Lagerrings 3 eingearbeitete rillenförmigen Laufbahnen 8, 9 abrollen und in Umfangsrichtung durch einen Lagerkäfig 10 in gleichmäßigen Abständen zueinander gehalten werden. Der Lagerkäfig 10 ist dabei, wie die Figuren 3 und 4 zeigen, als Fensterkäfig ausgebildet, der zwei seitliche, um zwei umlaufende Bördelkanten 11, 12 zum inneren Lagerring 3 abgebogene Käfigborde 14, 15 zur Axialführung der Kugelrollen 4 aufweist, die durch mehrere Taschenstege 13 miteinander verbunden sind. Die einzelnen durch die Taschenstege 13 voneinander getrennten Käfigtaschen 16 des Lagerkäfigs weisen dabei deutlich sichtbar jeweils eine Kreuzlochform auf, die, wie in Figur 5 dargestellt, aus einer längs zur Umfangsrichtung angeordneten und durch punktierte Hilfslinien angedeuteten Querschnittskontur 17 einer Kugelrolle 4 und aus einer darin integrierten, quer zur Umfangsrichtung angeordneten sowie durch gestrichelte Hilfslinien angedeuteten Freikontur 18 zum Einsetzen einer Kugelrolle 4 in den Lagerkäfig 10 gebildet wird.

Desweiteren wird durch Figur 5 deutlich, dass die Freikontur 18 in jeder Käfigtasche 16 des Lagerkäfigs 10 auf die flächenpunktiert dargestellte geometrische Form eines Rechtecks erweitert ausgebildet ist, um die Taschenstege 13 zwischen den Käfigtaschen 16 an ihren Übergängen zu den Käfigborden 14, 15 schmaler auszubilden und somit deren Steifigkeit zu verringern. Die kurzen Seiten 21, 22 des Rechtecks der Freikontur 18 erstrecken sich dabei deutlich sichtbar nahezu bis zu den Bördelkanten 11, 12 der Käfigborde 14, 15 und sind parallel zu diesen verlaufend angeordnet. Zusätzlich ist die Freikontur 18 in jeder Käfigtasche 16 mit in die langen Seiten 23, 24 des Rechtecks eingearbeiteten und dessen kurzen Seiten 21, 22 verlängernden Ausklinkungen 25, 26, 27, 28 ausgebildet, um somit die Breite der Taschenstege 13 an ihren Übergängen zu den Käfigborden 14, 15 noch weiter zu verringern und ein Höchstmaß an Flexibilität der Taschenstege 13 beim Einrollen des Lagerkäfigs 10 zu einem Ring zu erreichen.

Aus Figur 6 geht schließlich noch hervor, dass außerdem die Bördelkanten 11, 12 der Käfigborde 14, 15 jeweils durch eine umlaufende linienförmige Rollierung 19, 20 in ihrer Materialstärke gegenüber der übrigen Materialstärke des Lagerkäfigs 10 verringert ausgebildet sind. Dadurch wird auch die Steifigkeit der Bördelkanten 11, 12 derart verringert, dass Materialeinschnürungen an den Käfigborden 14, 15 bei der Käfigherstellung auf ein Minimum reduziert werden und beim abschließenden Bördeln in Richtung der Seitenflächen der Kugelrollen 4 keine weitere Deformierungen am Lagerkäfig 10 verursacht werden. Darüber hinaus machen es die Rollierungen 19, 20 an den Bördelkanten 11, 12, möglich, die Käfigborde 14, 15 radial länger als in der in Figur 6 dargestellten Form auszubilden und ggf. mit einer umlaufenden Sicke zu versteifen. Dadurch ist ein solcher Lagerkäfig 10 auch für Anwendungen mit sehr hohen axialen Belastungen oder mit wechselnden Axiallasten geeignet, wobei es in diesem Fall vorteilhaft ist, die verlängerten Käfigborde 14, 15 zur Verschleißminimierung zusätzlich partiell zu härten oder zu beschichten.

### Bezugszahlenliste

- 1: Kugelrollenlager
- 2: äußerer Lagerring
- 3: innerer Lagerring
- 4: Kugelrollen
- 5: Laufflächen
- 6: Innenseite von 2
- 7: Außenseite von 3
- 8: Laufbahn in 6
- 9: Laufbahn in 7
- 10: Lagerkäfig
- 11: Bördelkante
- 12: Bördelkante
- 13: Taschenstege
- 14: Käfigbord
- 15: Käfigbord
- 16: Käfigtaschen
- 17: Querschnittskontur von 4 in 16
- 18: Freikontur in 16
- 19: Rollierung in 11
- 20: Rollierung in 12
- 21: kurze Seite von 18
- 22: kurze Seite von 18
- 23: lange Seite von 18
- 24: lange Seite von 18
- 25: Ausklinkung in 23
- 26: Ausklinkung in 23
- 27: Ausklinkung in 24
- 28: Ausklinkung in 24

## Patentansprüche

1. Kugelrollenlager (1), im Wesentlichen bestehend aus einem äußeren Lagerring (2) und einem inneren Lagerring (3) sowie aus einer Vielzahl zwischen diesen Lagerringen (2, 3) angeordneter Kugelrollen (4), die mit ihren Laufflächen (5) in zwei in die Innenseite (6) des äußeren Lagerrings (2) und in die Außenseite (7) des inneren Lagerrings (3) eingearbeitete rillenförmigen Laufbahnen (8, 9) abrollen und in Umfangsrichtung durch einen Lagerkäfig (10) in gleichmäßigen Abständen zueinander gehalten werden, **dadurch gekennzeichnet, dass** der Lagerkäfig (10) als Fensterkäfig mit zwei seitlichen, um zwei umlaufende Bördelkanten (11, 12) zum inneren Lagerring (3) abgebogenen und durch mehrere Taschenstege (13) miteinander verbundenen Käfigborden (14, 15) zur Axialführung der Kugelrollen (4) ausgebildet ist und dessen einzelne durch die Taschenstege (13) voneinander getrennten Käfigtaschen (16) jeweils eine Kreuzlochform aufweisen, die aus einer längs zur Umfangsrichtung angeordneten Querschnittskontur (17) einer Kugelrolle (4) und aus einer darin integrierten, quer zur Umfangsrichtung angeordneten Freikontur (18) zum Einsetzen einer Kugelrolle (4) in den Lagerkäfig (10) gebildet wird, wobei die Freikontur (18) in jeder Käfigtasche (16) des Lagerkäfigs (10) auf die geometrische Form eines Rechtecks erweitert ausgebildet ist und dass die Bördelkanten (11, 12) der Käfigborde (14, 15) jeweils durch eine umlaufende linienförmige Rollierung (19, 20) in ihrer Materialstärke gegenüber der übrigen Materialstärke des Lagerkäfigs (10) verringert ausgebildet sind.

2. Kugelrollenlager nach Anspruch 1, **dadurch gekennzeichnet, dass** die kurzen Seiten (21, 22) des Rechtecks der Freikontur (18) sich bis oder nahezu bis zu den Bördelkanten (11, 12) der Käfigborde (14, 15) erstreckend sowie parallel zu diesen verlaufend angeordnet sind.

3. Kugelrollenlager nach Anspruch 1, **dadurch gekennzeichnet, dass** die Freikontur (18) in jeder Käfigtasche (16) zusätzlich mit in die langen Seiten (23, 24) des Rechtecks eingearbeiteten und dessen kurzen Seiten (21, 22) verlängernden Ausklinkungen (25, 26, 27, 28) ausgebildet ist.

## Claims

1. Ball roller bearing (1), essentially comprising an outer bearing ring (2), an inner bearing ring (3) and a multiplicity of ball rollers (4) arranged between said bearing rings (2, 3), which ball rollers roll on the running surfaces (5) thereof in two groove-shaped races (8, 9) machined into the inner side (6) of the outer bearing ring (2) and into the outer side (7) of the inner bearing ring (3) and are held at uniform distances from one another in the circumferential direction by a bearing cage (10), **characterized in that** the bearing cage (10) is designed as a window cage having two lateral cage flanges (14, 15), which are bent around two encircling flanging edges (11, 12) toward the inner bearing ring (3), are interconnected by a plurality of pocket webs (13) and serve to guide the ball rollers (4) axially, and the individual cage pockets (16) thereof, which are separated from one another by the pocket webs (13), each have a cross hole shape, which is formed from a cross-sectional contour (17) of a ball roller (4), said contour being arranged longitudinally with respect to the circumferential direction, and from a free contour (18), which is integrated therein, is arranged transversely to the circumferential direction and serves for the insertion of a ball roller (4) into the bearing cage (10), wherein the free contour (18) in each cage pocket (16) of the bearing cage (10) is designed so as to be enlarged to the geometric shape of a rectangle and **in that** the flanging edges (11, 12) of the cage flanges (14, 15) are each designed to have a material thickness which is reduced compared to the remaining material thickness of the bearing cage (10) by an encircling linear rolled profile (19, 20).

2. Ball roller bearing according to Claim 1, **characterized in that** the short sides (21, 22) of the rectangle of the free contour (18) are arranged so as to extend as far as or almost as far as the flanging edges (11, 12) of the cage flanges (14, 15) and so as to run parallel thereto.

3. Ball roller bearing according to Claim 1, **characterized in that** the free contour (18) in each cage pocket (16) is additionally designed with notches (25, 26, 27, 28), which are machined into the long sides (23, 24) of the rectangle and extend the short sides (21, 22) thereof.

## Revendications

1. Roulement à rouleaux sphériques (1), se composant essentiellement d'une bague de roulement extérieure (2) et d'une bague de roulement intérieure (3), ainsi que d'une multiplicité de rouleaux sphériques (4) disposés entre ces bagues de roulement (2, 3), qui roulent avec leurs surfaces de roulement (5) dans deux chemins de roulement en forme de gorges (8, 9) usinés dans le côté intérieur (6) de la bague de roulement extérieure (2) et dans le côté extérieur (7) de la bague de roulement intérieure (3) et qui sont maintenus à des distances régulières l'un de l'autre en direction périphérique à l'aide d'une cage de roulement (10), **caractérisé en ce que** la cage de roulement (10) est réalisée sous forme d'une cage à fenêtres avec deux collets de cage latéraux (14, 15) recourbés vers la bague de roulement intérieure (3) autour de deux arêtes de bordage (11, 12) et reliés l'un à l'autre par plusieurs entretoises de poche (13) pour le guidage axial des rouleaux sphériques (4) et dont les poches de cage individuelles (16) séparées l'une de l'autre par les entretoises de cage (13) présentent respectivement un trou en forme de croix, qui est formé par un contour de section transversale (17) d'un rouleau sphérique (4) disposé le long de la direction périphérique et d'un contour libre (18) intégré dans celui-ci et disposé transversalement à la direction périphérique pour l'insertion d'un rouleau sphérique (4) dans la cage de roulement (10), dans lequel le contour libre (18) dans chaque poche de cage. (16) de la cage de roulement (10) est réalisé de façon élargie à la forme géométrique d'un rectangle et **en ce que** les arêtes de bordage (11, 12) des collets de cage (14, 15) sont réalisées de façon réduite en épaisseur de matière par rapport au reste de l'épaisseur de matière de la cage de roulement (10) par un roulage linéique périphérique (19, 20).

2. Palier à rouleaux sphériques selon la revendication 1, **caractérisé en ce que** les côtés courts (21, 22) du rectangle du contour libre (18) s'étendent jusqu'aux ou pratiquement jusqu'aux arêtes de bordage (11, 12) des collets de cage (14, 15) et sont disposés parallèlement à ceux-ci.

3. Palier à rouleaux sphériques selon la revendication 1, **caractérisé en ce que** le contour libre (18) dans chaque poche de cage (16) est en outre réalisé avec des mortaises (25, 26, 27, 28) usinées dans les côtés longs (23, 24) du rectangle et prolongent les côtés courts (21, 22) de celui-ci.
